(19) Europäisches Patentamt
European Patent Office
Office européen des brevets

(11) EP 4 559 944 A1

(12) **EUROPEAN PATENT APPLICATION**
published in accordance with Art. 153(4) EPC

(43) Date of publication:
**28.05.2025 Bulletin 2025/22**

(21) Application number: **23921962.9**

(22) Date of filing: **17.02.2023**

(51) International Patent Classification (IPC):
***C08G 6/02*** (2006.01) ***C08G 18/56*** (2006.01)
***C08G 65/16*** (2006.01) ***C08G 2/08*** (2006.01)
***H01M 10/0525*** (2010.01) ***H01M 10/058*** (2010.01)
***H01M 4/62*** (2006.01)

(52) Cooperative Patent Classification (CPC):
**C08G 2/08; C08G 6/02; C08G 18/56; C08G 65/16; H01M 4/62; H01M 10/0525; H01M 10/058;**
Y02E 60/10

(86) International application number:
**PCT/CN2023/076789**

(87) International publication number:
**WO 2024/168812 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **PENG, Shuangjuan**
  **Ningde, Fujian 352100 (CN)**
- **PENG, Lin**
  **Ningde, Fujian 352100 (CN)**
- **LI, Baiqing**
  **Ningde, Fujian 352100 (CN)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **ALDEHYDE-KETONE POLYMER, ELECTRODE SHEET AND RELATED BATTERY CELL, BATTERY, AND ELECTRIC DEVICE**

(57) The present application provides an aldehyde-ketone polymer, an electrode plate and related battery cell, battery and electrical device. The aldehyde-ketone polymer satisfies: $5 \leq m/n \leq 1000$, in which n represents a mass of the aldehyde-ketone polymer, in grams, and m represents a mass, in grams, of a first substance that is obtained by: adding the aldehyde-ketone polymer to a first solvent at 45°C to form a polymer system; allowing the polymer system to stand for 8 hours at 45°C and for ≥24 hours at 25°C, and then filtering the polymer system through a 200-mesh screen to obtain remains as the first substance. When aldehyde-ketone polymer is applied to battery cells, it can improve the cycle performance of the battery cells.

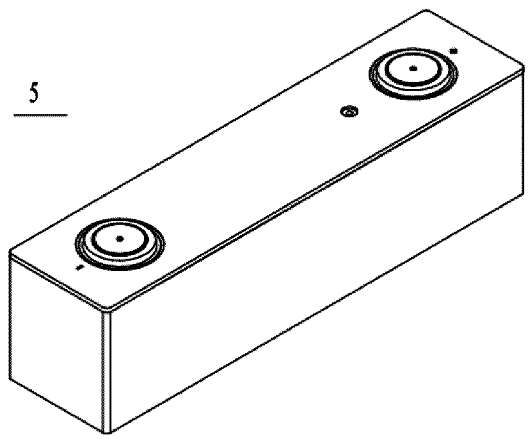


FIG. 1

EP 4 559 944 A1

## Description

### TECHNICAL FIELD

The present application relates to the field of battery, in particular to an aldehyde-ketone polymer, an electrode plate and related battery cell, battery and electrical device.

### BACKGROUND

Battery cells have the characteristics of high capacity and long life, and are therefore widely used in electronic devices, such as mobile phones, laptops, electric bicycles, electric vehicles, electric aircraft, electric ships, electric toy cars, electric toy ships, electric toy aircraft and electric tools.

As the application range of batteries becomes more and more extensive, the requirements for the performance of battery cells are also becoming more stringent. In order to improve the safety performance of battery cells, performances of the electrode plate inside battery cells are usually optimized and improved. However, the current active material in the electrode plates has poor liquid storage capability, which leads to poor cycle performance of battery cells when it is adapted to the battery cells.

### SUMMARY

The present application is made in view of the above issues, and its object is to provide an aldehyde-ketone polymer, an electrode plate, and related battery cell, battery, and electrical device.

A first aspect of the present application provides an aldehyde-ketone polymer for a battery cell, wherein the aldehyde-ketone polymer satisfies: $5 \leq m/n \leq 1000$, in which n represents a mass of the aldehyde-ketone polymer, in grams, and m represents a mass, in grams, of the first substance that is obtained by: adding the aldehyde-ketone polymer to a first solvent at 45°C to form an aldehyde-ketone polymer system, allowing the aldehyde-ketone polymer system to stand for 8 hours at 45°C and for ≥24 hours at 25°C; and then filtering the aldehyde-ketone polymer system through a 200-mesh screen to obtain remains as the first substance. When the aldehyde-ketone polymer meets the above conditions, it can further improve the cycle performance and storage performance of the battery cell.

As a result, the aldehyde-ketone polymer of the present application can achieve stretching out for its molecular chains within a higher safety operating temperature range of secondary batteries, which promotes the mutual attraction and physical binding between the aldehyde-ketone polymer molecular chains and the solvent in an electrolytic solution, and is beneficial to the binding of the aldehyde-ketone polymer molecular chains and the solvent. Thus, the electrolytic solution can be stored in a layer of an active material. The aldehyde-ketone polymer may not have mobility within a lower safety operating temperature range of secondary batteries, which allows the aldehyde-ketone polymer to maintain attachment on the surface of the active material and to lock the electrolytic solution in a space environment where the aldehyde-ketone polymer is located, improving the liquid storage capacity of the active material layer, and the electrolytic solution has good infiltrability to the active material layer. As a result, the cycle performance of the secondary battery using the aldehyde-ketone polymer is improved.

In some embodiments, $10 \leq m/n \leq 1000$; further optionally, $10 \leq m/n \leq 50$. When the aldehyde-ketone polymer meets the above conditions, it can further improve the cycle performance of the battery cell.

In some embodiments, the first solvent comprises a cyclic carbonate solvent and/or a linear carbonate solvent.

Optionally, the cyclic carbonate solvent comprises one or more of ethylene carbonate EC, vinylene carbonate VC, fluoroethylene carbonate FEC, difluoroethylene carbonate DFEC, vinyl ethylene carbonate VEC, and dicaprylyl carbonate CC.

Optionally, the linear carbonate solvent comprises one or more of dimethyl carbonate DMC, diethyl carbonate DEC, methyl ethyl carbonate EMC, diphenyl carbonate DPC, methyl allyl carbonate MAC, and polycarbonate VA.

In some embodiments, the aldehyde-ketone polymer is formed into a sheet-like structure. The sheet-like structure is subjected to dynamic frequency scanning tests at $(T_m+20)$°C to obtain an elastic modulus G'-loss modulus G" curve, the slope of which is K, and $0.8<K<\infty$; $T_m$°C represents the melting temperature of the aldehyde-ketone polymer.

As a result, when the aldehyde-ketone polymer of the present application meets the above range, it can further reduce the entanglement of the molecular chains, which is beneficial for the diffusion of solvent molecules in the electrolytic solution between the molecular chains and facilitates the formation of a gel-state substance. Moreover, the aldehyde-ketone polymer still maintains a certain degree of molecular chain entanglement, which is capable of locking the solvent molecules in situ in the internal part of the polymer, and is able to reduce the risk of the aldehyde-ketone polymer being dissolved in the electrolytic solution, and to increase the stability of the polymer performance; In addition, it is favorable for the aldehyde-ketone polymer to form a protective layer on the surface of the active material, improve the solid-liquid interface performance, reduce the side reaction between the active material and the electrolytic solution, and improve the

cycle performance of the battery cell.

In some embodiments, the aldehyde-ketone polymer has a glass transition temperature of $T_g$°C, and $-100 \leq T_g \leq 50$; optionally, $-80 \leq T_g \leq 30$. The aldehyde-ketone polymer has a relatively low glass transition temperature, its molecular chains have a better chain segment flexibility, and adjacent molecular chains are more likely to separate so as to form an in-situ gel easily, thereby improving the infiltrability of the electrolytic solution to the active material layer and thus improving the cycle performance of the battery cell.

In some embodiments, the aldehyde-ketone polymer comprises the structural unit shown in Formula (I):

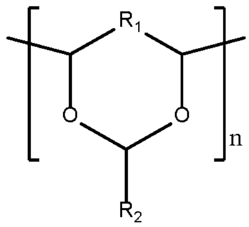

Formula (I).

In Formula (I), $R_1$ comprises a single bond, a substituted or unsubstituted C1-C6 methylene group; $R_2$ comprises a hydrogen atom, a substituted or unsubstituted C1-C6 alkyl group; optionally, $R_1$ comprises a single bond, a substituted or unsubstituted C1-C3 methylene group; $R_2$ comprises a hydrogen atom, a substituted or unsubstituted C1-C3 alkyl group.

In some embodiments, the aldehyde-ketone polymer comprises at least one of the structural units shown in Formula (I-1) to Formula (I-6),

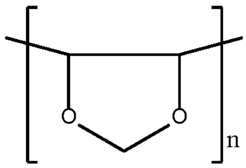

Formula (I-1),

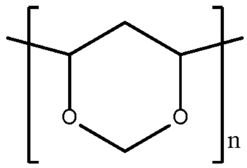

Formula (I-2),

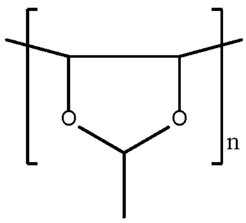

Formula (I-3),

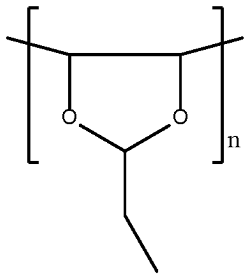

Formula (I-4),

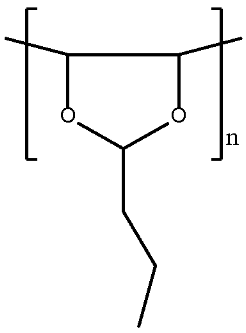

Formula (I-5),

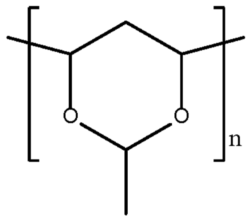

Formula (I-6).

In some embodiments, the aldehyde-ketone polymer comprises the structural units shown in Formula (II),

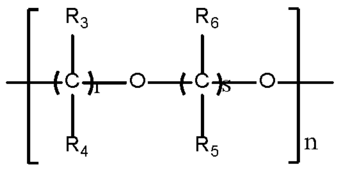

Formula (II).

In Formula (II), $R_3$ to $R_6$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s each independently are integers selected from 0 to 5, and at least one of r and s is a positive integer. Optionally, $R_3$ to $R_6$ each independently comprise a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde-ketone polymer comprises at least one of the structural units shown in Formula (II-1) to Formula (II-4),

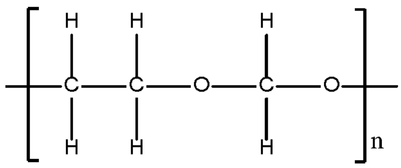

(II-1),

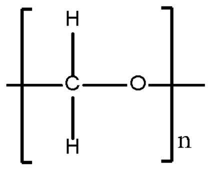

(II-2),

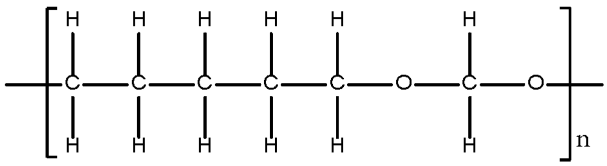

(II-3),

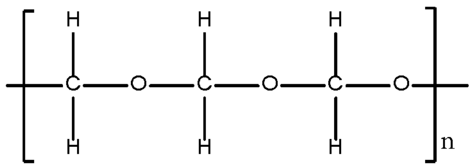

(II-4).

In some embodiments, n is a positive integer selected from 500 to 15000; and/or the aldehyde-ketone polymer has a molecular weight of from $1.2\times10^5$g/mol to $1.0\times10^6$g/mol. When the molecular weight of the polymer is within the above range, it can ensure that the polymer exhibits a certain degree of solubility in the electrolytic solution while not being completely dissolved and dispersed by the electrolytic solution, which is beneficial for regulating the distribution and dispersion of the polymer on the surface of the active material. Furthermore, it can further enhance the flexibility of the molecular chains of the polymer, with a relatively weak intermolecular force, which is conducive to the solvent molecules in the electrolytic solution to separate the molecular chains and enter the space among the molecular chains, and then be encapsulated by the molecular chains. This, in turn, facilitates active ions to pass through the solvent into the active material, achieving smooth and rapid migration of the active ions.

A second aspect of the present application provides a positive electrode plate, comprising a positive electrode current collector and a positive electrode film layer disposed on the positive electrode current collector, wherein the positive electrode film layer comprises a positive electrode active material and an aldehyde-ketone polymer, and the aldehyde-ketone polymer comprises the aldehyde-ketone polymer as described in any embodiment of the first aspect of the present application.

A third aspect of the present application provides a negative electrode plate, comprising a negative electrode current collector and a negative electrode film layer disposed on the negative electrode current collector, wherein the negative electrode film layer comprises a negative electrode active material and an aldehyde-ketone polymer, and the aldehyde-ketone polymer comprises the aldehyde-ketone polymer as described in any embodiment of the first aspect of the present application.

A fourth aspect of the present application provides a battery cell comprising a positive electrode plate and a

negative electrode plate, wherein the positive electrode plate comprises the positive electrode plate as described in any embodiment of the second aspect of the present application; and/or the negative electrode plate comprises the negative electrode plate as described in any embodiment of the third aspect of the present application.

A fifth aspect of the present application provides a battery, comprising the battery cell as described in the fourth aspect of the present application.

A sixth aspect of the application provides an electrical device comprising the battery as described in the fifth aspect of the present application.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of an embodiment of a battery cell according to the present application.
FIG. 2 is an exploded view of the embodiment of the batty cell of FIG. 1.
FIG. 3 is a schematic diagram of an embodiment of a battery module according to the present application.
FIG. 4 is a schematic diagram of an embodiment of a battery pack according to the present application.
FIG. 5 is an exploded view of the embodiment of the battery pack of FIG. 4.
FIG. 6 is a schematic diagram of an embodiment of an electrical device that comprises a battery cell of the present application as a power source.

The drawings are not drawn to actual scale.

Reference numerals are as follows:

1. Battery pack; 2. Upper case body; 3. Lower case body; 4. Battery module;
5. Battery cell; 51. Housing; 52. Electrode assembly;
53. Cover plate;
6. Electrical device.

## DETAILED DESCRIPTION

Hereinafter, embodiments of the aldehyde-ketone polymer, the electrode plate and related battery cell, battery and electrical device according to the present application will be described in detail. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution. Unless stated otherwise, all technical features and optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b)

and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, the terms "multiple" and "more than one" mean two or more, unless otherwise stated and specifically limited.

The term "alkyl" covers both linear and branched alkyl. For example, alkyl may be C1-C5 alkyl, C1-C4 alkyl, C1-C3 alkyl, C1-C2 alkyl. In some embodiments, alkyl comprises methyl, ethyl, propyl, isopropyl, butyl, isobutyl, and the like. Alternatively, alkyl may be optionally substituted. When substituted, the substituent comprises a fluorine atom.

The term "alkoxy" refers to a group in which alkyl is connected to an oxygen atom by a single bond. For example, alkoxy may be C1-C5 alkoxy, C1-C3 alkoxy, C1-C2 alkoxy. In some embodiments, alkoxy may comprise methoxy, ethoxy, or propoxy. Alternatively, alkoxy may be optionally substituted.

The term "halogen atom" refers to a fluorine atom, a chlorine atom, a bromine atom, and the like.

The term "hydrogen" refers to 1H (protium, H), 2H (deuterium, D) or 3H (tritium, T). In each embodiment, "hydrogen" may be 1H (protium, H).

A secondary battery comprises a positive electrode plate, a negative electrode plate, and an electrolytic solution and the electrolytic solution infiltrates the positive and negative electrode plates, thereby enabling the smooth migration of active ions between the positive and negative electrode plates.

The electrode plate (for example, the positive electrode plate and/or the negative electrode plate) comprises a current collector and an active material layer disposed on at least one surface of the current collector. The active material layer comprises a porous structure. The electrolytic solution diffuses from the surface of the active material through the porous structure into the active material layer, thereby enabling the active material layer to be infiltrated by the electrolytic solution and allowing the active ions to migrate smoothly from the positive electrode plate to the negative electrode plate.

In the related technology, active material layers often exhibit poor affinity to the electrolytic solution, and thus the electrolytic solution has poor infiltration to the active material layer, which leads to poor liquid storage capacity of the active material layers. During the use, transportation, or assembly of secondary batteries into modules, they may be subjected to external compressive forces. These forces can expel the electrolytic solution from the active material layer to the outside, making it increasingly difficult for the electrolytic solution to be reabsorbed, causing the capacity of secondary batteries to decay, and the cycle performance of secondary batteries to deteriorate.

In view of this, the inventors have set out to improve the liquid storage capacity of electrode plates by adding aldehyde-ketone polymers into the electrode plates, enhancing the affinity between the electrode plates and the electrolytic solution, and improving the infiltration of the electrolytic solution on the electrode plates, thereby improving the cycle performance of the secondary battery using the aldehyde-ketone polymers.

## Aldehyde-ketone polymer

In a first aspect, the present application provides an aldehyde-ketone polymer. The aldehyde-ketone polymer is used for a battery cell, and the aldehyde-ketone polymer is added to a first solvent at 45°C to form an aldehyde-ketone polymer system; the aldehyde-ketone polymer system is allowed to stand for 8 hours at 45°C and for ≥24 hours at 25°C. After undergoing the above two stages of standing treatment, a portion of the aldehyde-ketone polymer system is transformed in situ into a gel-state material. The aldehyde-ketone polymer system is then filtered through a 200-mesh filter screen, to obtain remains as the first substance. After the aldehyde-ketone polymer system is filtered through the 200-mesh filter screen, the solvent as a mobile phase is filtered out, and the residual material, which is the first substance, is retained. The aldehyde-ketone polymer and the first substance satisfy: $5 \leq m/n \leq 1000$, in which n represents a mass of the aldehyde-ketone polymer, in grams, and m represents a mass of the first substance, in grams; optionally, $10 \leq m/n \leq 1000$; further optionally, $10 \leq m/n \leq 50$. By way of example, m/n may be 5, 10, 20, 25, 28, 30, 32, 35, 40, 50, 80, 100, 200, 500, 1000, or within a range consisting of any two of the aforementioned values.

By way of example, based on the mass of the aldehyde-ketone polymer system, a ratio of the mass content of the aldehyde-ketone polymer to the mass content of the first solvent ranges from 1:100 to 1:10, for instance, 3:50.

By way of example, the first solvent may be the same or similar to the solvent for the electrolytic solution, and the first solvent may comprise carbonate solvents. For example, the carbonate solvents may comprise a cyclic carbonate solvent and/or a linear carbonate solvent.

As an example, the cyclic carbonate solvent may comprise one or more of ethylene carbonate (EC), vinylene carbonate (VC), fluoroethylene carbonate (FEC), difluoroethylene carbonate (DFEC), vinyl ethylene carbonate (VEC), and dicarpylyl carbonate (CC).

As an example, the linear carbonate solvent may comprise one or more of dimethyl carbonate (DMC), diethyl carbonate (DEC), ethyl methyl carbonate (EMC), diphenyl carbonate (DPC), methyl acrylate carbonate (MAC), and polycarbonate (VA).

Optionally, a lithium salt and additives for an electrolytic solution may simultaneously contained in the first solvent, such as lithium hexafluorophosphate, vinylene carbonate (VC), fluoroethylene carbonate (FEC), and the like.

In the present application, m/n is also referred to as a precipitation value, which characterizes the ability of the aldehyde-ketone polymer and solvent to transform into a gel-state material.

The first substance mainly comprises a gel-state material formed by the aldehyde-ketone polymer and the first solvent, in which the molecular structure of the aldehyde-ketone polymer essentially keep unchanged.

In some embodiments, the first substance is dried at 80°C for 12 hours to remove the first solvent from the first substance, and is tested by infrared spectrophotometry IR or NMR spectroscopy. After drying, the first substance mainly consists of the aldehyde-ketone polymer as previously described.

The aldehyde-ketone polymer can achieve stretching out for its molecular chains within a higher safety operating temperature range of secondary batteries, which promotes the mutual attraction and physical binding between the aldehyde-ketone polymer molecular chains and the solvent in an electrolytic solution, and is beneficial to the binding between the aldehyde-ketone polymer molecular chains and the solvent. Thus, the electrolytic solution can be stored in an active material layer. The aldehyde-ketone polymer may not have mobility within a lower safety operating temperature range of secondary batteries, which allows the aldehyde-ketone polymer to maintain attachment on the surface of the active material and to lock the electrolytic solution in a space environment where the aldehyde-ketone polymer is located, improving the liquid storage capacity of the active material layer, and the electrolytic solution has good infiltrability to the active material layer. As a result, the cycle performance of the secondary battery using the aldehyde-ketone polymer is improved.

In the present application, the aldehyde-ketone polymer achieves the stretching out for its molecular chains at elevated temperature within the safe operating temperature range of the battery cell, promoting the mutual attraction and physical binding between the aldehyde-ketone polymer molecular chains and the solvent. At normal temperature, the aldehyde-ketone polymer molecular chain segments have decreased mobility, maintaining attachment on the surface of the active material and locking the electrolytic solution in a space environment where the aldehyde-ketone polymer is located, forming a state similar to an in-situ gel. As a result, the liquid storage capacity of the active material layer is improved and the cycle performance of the secondary battery using the aldehyde-ketone polymer is improved.

In some embodiments, the aldehyde-ketone polymer is formed into a sheet-like structure. The sheet-like structure is subjected to dynamic frequency scanning tests at ($T_m$+20)°C to obtain an elastic modulus G'-loss modulus G" curve, the slope of which is K, and $0.8 \le K < \infty$, $0.8 \le K \le 100$; optionally, $0.8 \le K \le 10$; $T_m$°C represents the melting temperature of the aldehyde-ketone polymer.

Specifically, the preparation process of the sheet-like structure is as follows: the polymer is vacuum-dried at 80°C for 12h. The dried polymer is then hot-pressed into sheets using a plate vulcanizing machine, with the hot-pressing temperature set to ($T_m$+20)°C, the rolling thickness is 1-2min, the rolling time is 2min, and the pressure is 8MPa. After rolling for 2min, the sample is removed and placed on another vulcanizing machine of the same model for cold pressing, with a pressure of 10MPa. A fixed-size polymer disc (sheet-like structure) can be obtained using a 25mm diameter circular mold. As an example, the sheet-like structure can be a disc with a thickness of 1-2mm and a diameter of 25mm; it can also be made to the sample standard required by the testing equipment.

According to the conclusions of classical linear viscoelasticity, for polymers, especially linear polymers, the elastic modulus G'-loss modulus G" in the terminal region (the range of angular velocity approaching the maximum value) of the elastic modulus G'-loss modulus G" curve exhibits frequency dependence, and the longest chains of the polymer play a role in the viscoelastic behavior.

The specific steps for measuring the dynamic frequency scan are as follows: a TA-AR2000EX rotational rheometer (TA Instruments, USA) is used to perform the dynamic frequency scan test, with parallel plates having a diameter of 25mm and a thickness of 0.9mm. To ensure that the test is conducted in the linear viscoelastic region, the strain during the dynamic frequency scan test should be 2%, the test temperature is set to ($T_m$+20)°C, and the frequency scan range is 500 rad/s $\le w^2 \le$ 0.05 rad/s, to obtain data from the lowest frequency region as much as possible.

The dynamic frequency scan test can characterize the degree of entanglement of molecular chains in the solid-phase melting (molten state) condition. Compared to linear structures or short branched structures, long-branched structures, networked structures, and low cross-linked structures have a higher degree of entanglement and will exhibit behavior deviating from linear terminal behavior, and thus polymers show solid-phase behavior. When the polymers of the present application meet the aforementioned range, they can further reduce the entanglement of molecular chain, which is beneficial for the diffusion of solvent molecules in the electrolytic solution between the molecular chains. Moreover, the

polymers still maintain a certain degree of molecular chain entanglement, which is capable of locking the solvent molecules in situ in the internal part of the polymer, and is able to reduce the risk of the polymer being dissolved in the electrolytic solution, and to increase the stability of the polymer performance. In addition, it is favorable for the polymer to form a protective layer on the surface of the active material, improve the solid-liquid interface performance, reduce the side reaction between the active material and the electrolytic solution, and improve the cycle performance of the battery cell.

In some embodiments, the aldehyde-ketone polymer has a glass transition temperature of $T_g$ in °C, $-100 \le T_g \le 50$; optionally, $-80 \le T_g \le 30$.

The glass transition temperature is such a temperature at which the chain segments of the aldehyde-ketone polymer transforms from freezing to movement, and the glass transition temperature has a certain effect on the flexibility of the aldehyde-ketone polymer molecular chain. The lower the glass transition temperature, the better the flexibility of the aldehyde-ketone polymer molecular chain at normal temperature, and the higher the glass transition temperature, the worse the flexibility of the molecular chain at normal temperature. The glass transition temperature can be measured by differential scanning calorimetry DSC. Specifically, the test procedure is as follows: taking 0.5g to 0.8g of a sample, placing it in a carrier crucible, and subjecting it to a heating and cooling cycle under nitrogen atmosphere, with a heating rate of 10°C/min from an initial temperature 20°C below the material's intrinsic $T_g$ to a final temperature 20°C above the material's intrinsic $T_m$. The actual glass transition temperature $T_g$ and melting temperature $T_m$ are determined based on the endothermic and exothermic peaks or transition points observed during the process.

The glass transition temperature of the aldehyde-ketone polymer is relatively low, the chain segment flexibility of molecular chains is better, and adjacent molecular chains can be easily separated. Exemplarily, the glass transition temperature of the aldehyde-ketone polymer may be -100°C, -90°C, -80°C, -60°C, -30°C, 0°C, 30°C, 50°C, or within a range consisting of any two of the above values.

In some embodiments, the aldehyde-ketone polymer comprises the structural unit shown in Formula (I):

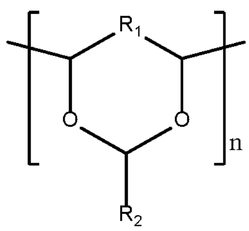

Formula (I).

In Formula (I), $R_1$ comprises a single bond, a substituted or unsubstituted C1-C6 methylene group; $R_2$ comprises a hydrogen atom, a substituted or unsubstituted C1-C6 alkyl group.

Optionally, $R_1$ comprises a single bond, a substituted or unsubstituted C1-C3 methylene group; $R_2$ comprises a hydrogen atom, a substituted or unsubstituted C1-C3 alkyl group.

As an example, the aldehyde-ketone polymer comprises at least one of the structural units shown in Formula (I-1) to Formula (I-6),

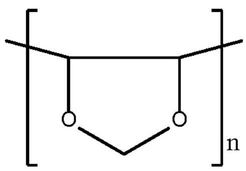

Formula (I-1),

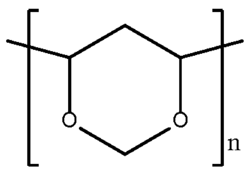

Formula (I-2),

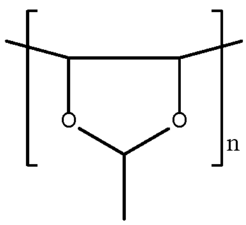

Formula (I-3),

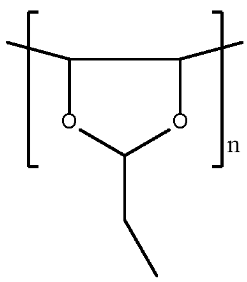

Formula (I-4),

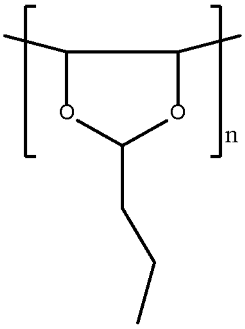
Formula (I-5),
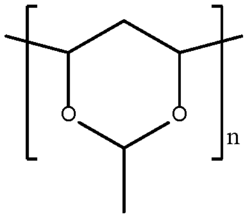
Formula (I-6).

As an example, the aldehyde-ketone polymer comprises the structural unit shown in Formula (II),

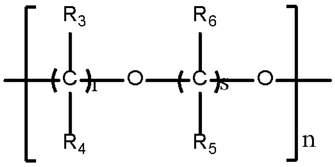
Formula (II).

In Formula (II), $R_3$ to $R_6$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s each independently are integers selected from 0 to 5, and at least one of r and s is a positive integer. Optionally, $R_3$ to $R_6$ each independently comprise a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde-ketone polymer comprises at least one of the structural units shown in Formula (II-1) to Formula (II-4),

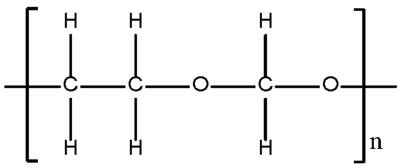
(II-1),
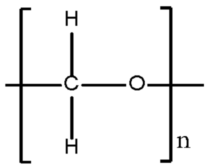
(II-2),

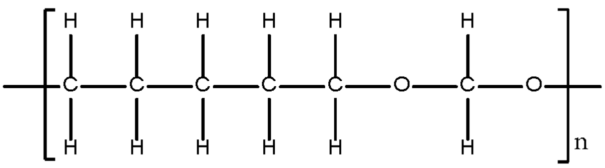
(II-3),

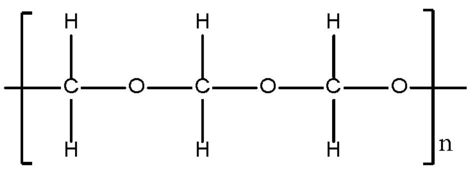
(II-4).

The above aldehyde-ketone polymer has a lower degree of molecular chains entanglement, which is advantageous for improving flexibility of the molecular chains, and the molecular chains can fully be stretched out in an electrolytic solution, thereby further improving the interfacial performance of the active material.

The aforementioned polymers are examples of structural groups for the main chain only. In the embodiments of the present application, the polymers can also be copolymers obtained by combining the above structural groups with other types of structural groups (such as olefin structural units, acrylonitrile structural units, etc.).

The groups of the polymer of the present application can be detected by infrared spectrophotometry IR. Specifically, the polymer is tested with a Thermo Nicolet Nexus 670 Attenuated Total internal Reflectance Fourier Transform Infrared spectroscopy (FTIR-ATR), with reference to GB/T6040-2002, within the test range: ATR method 600-4000cm$^{-1}$; repeatability: $\pm$2cm$^{-1}$; resolution: better than 4cm$^{-1}$; transmission depth of 0.2-0.6 $\mu$m.

The structure of the polymer of the present application can be tested by nuclear magnetic resonance NMR. Specifically, 1H NMR and 13C NMR are performed on a Varian Mercury Plus-400 NMR Nuclear Magnetic Resonance Spectrometer at a testing temperature of 20 °C, with TMS as an internal standard, $CDCl_3$ as a solvent, and a proton resonance frequency of 400 MHz.

The type of polymer monomers in the polymers of the present application (particularly suitable for monomers that make up a smaller proportion in the polymer) can be determined by pyrolysis-gas chromatography-mass spectrometry. The specific test steps are as follows: accurately weigh 0.5 mg of the sample into a sample cup, fix it on the injection rod, and then load it into the pyrolyzer installed near the GC (gas chromatography) injection port; after the pyrolyzer temperature reaching the set temperature, press the injection button, and the sample cup quickly falls into the heart of the pyrolysis furnace through free fall; in an inert gas $N_2$ atmosphere, volatile components are instantly vaporized and carried into the gas chromatography column by the carrier gas for separation, and finally detected by a flame ionization detector FID or a mass spectrometer MS, thereby obtaining a gas chromatogram or a total ion chromatogram.

When the aforementioned groups are substituted, the substituents may comprise one or more of cyano group (-CN), nitro group, sulfonyl group, carboxyl group, ester group, a fluorine atom, a chlorine atom, a bromine atom. If the above substituents are high-pressure resistant substituents, it is more conducive to stabilizing the structure of the polymer.

In some embodiments, n is a positive integer selected from 800 to 20000.

Optionally, n is a positive integer selected from 1000 to 15000.

In some embodiments, the polymer has a molecular weight of from $1.2\times10^5$g/mol to $1.0\times10^6$g/mol.

When the molecular weight of the polymer is within the above range, it can ensure that the polymer exhibits a certain degree of solubility in the electrolytic solution while not being completely dissolved and dispersed by the electrolytic solution, which is beneficial for regulating the distribution and dispersion of the polymer on the surface of the active material. Furthermore, it can further enhance the flexibility of the molecular chains of the polymer, with a relatively weak intermolecular force, which is conducive to the solvent molecules in the electrolytic solution to separate the molecular chains and enter the space among the molecular chains, and then be encapsulated by the molecular chains. This, in turn, facilitates active ions to pass through the solvent into the active material, achieving smooth and rapid migration of the active ions. Exemplary, the molecular weight of the polymer may be $1.2\times10^5$g/mol, $2\times10^5$g/mol, $5\times10^5$g/mol, $8\times10^5$g/mol, $1\times10^6$g/mol, or within a range consisting of any two of the above values.

The molecular weight of the polymer has a well-known meaning in the art and can be determined by the equipment and methods commonly used in the art. It can be tested with a gel permeation chromatography GPC with the specific test steps as follows: An appropriate amount of the sample to be tested (the sample concentration is guaranteed to be 8%-12% shading) is taken, 20ml deionized water is added, and the resulting mixture is ultrasonicated for 5min (53KHz/120W) to ensure that the sample is completely dispersed, and then the sample is determined according to GB/T19077-2016/ISO 13320:2009.

Alternatively, a multi-angle laser light scatterer MALLS is used. Specifically an instrument of GPC combined with a Dawn Heleos II mode multi-angle laser light scatterer, an Optilab T-rEX refractive index (RI) detector and a Visco Star II viscometer (Wyatt Technology Corporation, USA) is used. The test is carried out at 30°C with THF as a mobile phase at a flow rate of 1.0 ml/min. The commercial software ASTRA6 is used to process the SEC-SAMLL data to obtain molecular weight parameters.

## Positive Electrode Plate

In a second aspect, the present application provides a positive electrode plate, comprising a positive current collector and a positive electrode film layer disposed on at least one surface of the positive current collector, wherein the positive electrode film layer comprises a positive electrode active material and an aldehyde-ketone polymer, in which the aldehyde-ketone polymer comprises the aldehyde-ketone polymer as described in any embodiment of the first aspect of the present application.

For example, the positive current collector has two surfaces that are opposite to each other in the direction of its own thickness. The positive electrode film layer is disposed on either or both of the two opposite surfaces of the positive current collector.

The electrode plate can be formed by applying a slurry on a current collector, followed by drying and cold-pressing. Alternatively, the electrode plate is derived from a battery cell, by disassembling the battery cell, i.e. taking out the electrode plate infiltrated in an electrolytic solution of the battery cell, and placing the electrode plate infiltrated in the electrolytic solution under the condition of 100°C for vacuum drying for 12 hours to obtain the electrode plate. The electrode plate is used for electrode plate tests such as test for liquid absorption rate.

The aldehyde-ketone polymer can be synthesized by emulsion polymerization, suspension polymerization, bulk polymerization, solution polymerization and the like. Alternatively, the aldehyde-ketone polymer is derived from a battery cell, by disassembling the battery cell, i.e. taking out the electrode plate infiltrated in an electrolytic solution of the battery cell, peeling off the active material of the obtained electrode plate by an external force to form a powder sample, adding the powder sample to dimethyl carbonate DMC, stirring it at 80°C for 8 hours @ 500 rpm, then allowing it to stand at room temperature for 10 minutes after the stirring is completed, taking the supernatant at 80°C, and drying it for 12 hours to obtain the aldehyde-ketone polymer. The resulting aldehyde-ketone polymer may be incorporated with a little lithium salt, but the salt basically does not affect the infrared test and precipitation value test. In order to ensure the accuracy of tests on the aldehyde-ketone polymer, flushing with DMC at room temperature may be used to remove the lithium salt.

In some embodiments, the positive electrode active material layer satisfies:

$$\lambda = 1 - \frac{P_1}{P_2} \qquad \text{Formula (1),}$$

$$v = \pi \times \left(\frac{d}{2}\right)^2 \times h \times \frac{\rho}{t} \qquad \text{Formula (2),}$$

$$v/\lambda > 1.00 \qquad \text{Formula (3),}$$

in Formula (1) to Formula (3),

- $\lambda$ represents a porosity of the positive electrode active material layer;
- $P_1$ represents an actual compaction density of the positive electrode active material layer, in g/cm$^3$;
- $P_2$ represents a true compaction density of the positive electrode active material, in g/cm$^3$;
- v represents a liquid absorption rate of the positive electrode active material layer, in mg/s,
- d represents a diameter of a capillary in a capillary test for the positive electrode active material layer, in mm;
- h represents a liquid level height in the capillary, in mm;
- $\rho$ represents a density of an electrolytic solution in the capillary test, in g/cm$^3$;
- t represents time when the electrolytic solution is absorbed in the capillary, in s.

In the present application, the actual compaction density $P_1$ refers to a ratio of the mass to the thickness of the positive electrode active material layer per unit area in the electrode plate. The actual compaction density is influenced by the force of rolling after coating the electrode plate, and expressed in g/cm$^3$. A specific test includes the steps of taking an electrode plate with a certain area S, weighing the mass M of the positive electrode active material layer, and measuring the thickness D of the positive electrode active material layer, in which the actual compaction density = M/(S $\times$ D).

In the present application, the true compaction density $P_2$ refers to a density of the positive electrode active material itself in the positive electrode active material layer. Specifically, it refers to the true compaction density determined according to P = m/V where m is the mass of " solid substance per actual volume" (excluding open holes and closed holes and pores between particles) in a dense state, and V is the true volume obtained by testing, which can be tested with reference to GB/T24586-2009. Specifically, the test steps may be as follows:

1) Pre-treatment: Taking a clean and dry sample cup and placing it on a balance, zero clearing, adding a powder sample to the sample cup, with the powder sample accounting for about 1/2 of the volume of the sample cup, and recording a mass of the sample;
2) Placing the sample cup containing the sample in a true density tester, sealing the test system, introducing helium gas according to the program, measuring the gas pressure in the sample chamber and the expansion chamber, and then calculating the true volume according to Bohr's law (PV = nRT), to calculate the true compaction density.

In the test, the sample cup has a volume of 3.5 cm$^3$, and helium is used as analytical gas.

According to the Formula (1), the porosity $\lambda$ of the active material layer can be calculated by using the actual compaction density and the true compaction density.

Specifically, $\lambda = \frac{V1-V2}{V1} = 1 - \frac{V2}{V1} = 1 - \frac{m/V1}{m/V2} = 1 - \frac{P_1}{P_2}$.

V1 represents the volume of the positive electrode active material layer having a mass m, in cm$^3$;
V2 represents the volume occupied by active particles in the positive electrode active material layer having a mass m,

in $cm^3$;
m represents the mass of the positive electrode active material layer, in g.

Formula (2) can characterize the speed at which a certain point on the electrode plate absorbs a liquid in the capillary (e.g., an electrolytic solution) almost completely within a unit of time. In the present application, a certain point on the electrode plate refers to an area of the electrode plate with a certain size, which corresponds to the cross-sectional area of the capillary.

In the present application, a method for measuring the liquid absorption rate of an electrode plate includes the following steps:

drawing a predetermined amount of electrolytic solution using a capillary;
contacting the capillary with the electrode plate, so as to allow the electrode plate to be measured to absorb the electrolytic solution in the capillary under capillary action;
after a predetermined time period t, recording the liquid level height h at which the electrolytic solution is absorbed in the capillary, and calculating the amount of the absorbed electrolytic solution by using the liquid level height h, the diameter d of the capillary and the density ρ of the electrolytic solution, and then quantitatively calculating the liquid absorption rate v of the electrode plate based on the ratio of the absorbed amount and the predetermined time period t.

Exemplarily, d may be a value from 0.2 to 1, e.g. a value of 0.2; h may be a value from 3 to 5, e.g. a value of 3.

The capillary has a capillary channel to enable the capillary to directly draw the electrolytic solution through capillary action, without the need for an external drive unit to provide the drawing force. In this way, on one hand, the absorption amount can be more precisely controlled when an electrolytic solution is absorbed through capillary action. On the other hand, the amount of electrolytic solution absorbed in the capillary tube can accurately reflect the corresponding volume of electrolytic solution absorbed by the electrode plate since the electrode plate absorbs the electrolytic solution through its own capillary action so that the electrolytic solution is only drawn out from the capillary when the capillary comes into contact with the electrode plate to be tested, and the electrolytic solution in the capillary no longer flows out when the contact is separated, which, in turn, further improves the accuracy of the test results, and thus quantitative calculation of the absorption rate of the electrolytic solution by the electrode plate is achieved.

The present application uses a standard electrolytic solution as a test sample, and the specific formulation of the electrolytic solution can be referred to the electrolytic solution formulation in the embodiments.

Formula (3) represents the liquid absorption rate of the electrode plate at a porosity λ and can be used to characterize the liquid absorption rate of the electrode plate.

The aldehyde-ketone polymer of the present application is introduced during the preparation process of the active material layer, which can form uniform high-infiltrability points inside the active material layer, and uniformly improve the infiltrability of the active material layer, thereby enhancing the overall liquid absorption rate of the active material layer, and thus improving the cycle performance of the battery cell using the electrode plate.

Optionally, $1.00<v/\lambda<50.00$.

In some embodiments, $1.00<v/\lambda<(4.00$; optionally, $1.20\leq v/\lambda\leq 3.80$; further optionally, $1.4\leq v/\lambda\leq 3.6$. Exemplarily, $v/\lambda$ may be 1.20, 1.40, 1.80, 2.00, 2.50, 3.00, 3.50, 3.60, 3.80, 3.90, or within a range consisting of any two of the aforementioned values.

In some embodiments, based on the mass of the positive electrode active material layer, the aldehyde-ketone polymer is present in a mass percentage of A%; where, $0.1\leq A\leq 1.5$.

When the mass percentage of the aldehyde-ketone polymer is within the above range, it can significantly improve the interfacial performance of the positive electrode active material layer. Exemplarily, the mass percentage content of the polymer may be 0.1%, 0.2%, 0.5%, 0.8%, 1.0%, 1.2%, 1.5%, or within a range consisting of any two of the aforementioned values.

The positive electrode film layer comprises a positive electrode active material, which can be a positive electrode active material known in the art for battery cells. Exemplarily, the positive electrode active material may comprise at least one of layered structure positive electrode active materials (such as ternary, lithium/sodium nickel oxide, lithium/sodium cobalt oxide, lithium/sodium manganese oxide, rich lithium/sodium layered and rock salt phase layered materials, and the like), olivine structure phosphate active materials, and spinel structure positive electrode active materials (such as spinel lithium manganese oxide, spinel lithium nickel manganese oxide, rich lithium spinel lithium manganese oxide and lithium nickel manganese oxide and the like).

Exemplarily, the layered structure positive electrode active materials have a general formula of $Li_xA_yNi_aCo_bMn_cM_{(1-a-b-c)}Y_z$, $0\leq x\leq 2.1$, $0\leq y\leq 2.1$, and $0.9\leq x+y\leq 2.1$; $0\leq a\leq 1$, $0\leq b\leq 1$, $0\leq c\leq 1$, and $0.1\leq a+b+c\leq 1$; $1.8\leq z\leq 3.5$; A is one or more selected from Na, K, and Mg; M is one or more selected from B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O, and F. Optionally, y=0. Specifically, the layered structure positive electrode active materials may comprise one or more of lithium cobalt oxide LCO, lithium nickel

oxide LNO, lithium manganese oxide LMO, $LiNi_{1/3}Co_{1/3}Mn_{1/3}O_2$ (NCM333), $LiNi_{0.8}Co_{0.1}Mn_{0.1}O_2$ (NCM811) and $LiNi_{0.5}Co_{0.2}Mn_{0.3}O_2$(NCM523).

Exemplarily, the olivine-structure phosphate active materials have a general formula of: $Li_xA_yMe_aM_3P_{1-c}X_cY_z$, $0 \le x \le 1.3$, $0 \le y \le 1.3$, and $0.9 \le x+y \le 1.3$; $0.9 \le a \le 1.5$, $0 \le b \le 0.5$, and $0.9 \le a+b \le 1.5$; $0 \le c \le 0.5$; $3 \le z \le 5$; A is one or more selected from Na, K, and Mg; Me is one or more selected from Mn, Fe, Co, and Ni; M is one or more selected from B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is one or more selected from S, Si, Cl, B, C, and N; Y is one or more selected from O, and F. Specifically, the olivine-structure phosphate active materials comprise one or more of $LiFePO_4$, $LiMnPO_4$, $LiNiPO_4$, and $LiCoPO_4$.

Exemplarily, the spinel-structure positive electrode active materials have a general formula of: $Li_xA_yMn_aM_{2-a}Y_z$, $0 \le x \le 2$, $0 \le y \le 1$, and $0.9 \le x+y \le 2$; $0.5 \le a \le 2$; $3 \le z \le 5$; A is one or more selected from Na, K, and Mg; M is one or more selected from Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O, and F. Specifically, the spinel-structure positive electrode active materials comprise one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. As an example of a metal foil, an aluminum foil or an aluminum alloy foil may be used. The composite current collector may include a polymeric material matrix and a metallic material layer formed on at least one surface of the polymeric material matrix. As an example, the metallic material may be one or more selected from aluminum, aluminum alloy, nickel, nickel alloy, titanium, titanium alloy, silver, and silver alloy, and the polymer material matrix may be one or more selected from polypropylene (PP), polyethylene terephthalate (PET), polybutylene terephthalate (PBT), polystyrene (PS), and polyethylene (PE).

In some embodiments, the positive electrode film layer may further optionally include a positive electrode conductive agent. In the present application, there is no particular limitation on the type of the positive electrode conductive agent. As an example, the positive electrode conductive agent includes one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally comprise a positive electrode binder. In the present application, there is no particular limitation on the type of the positive electrode binder. As an example, the positive electrode binder may include one or more of polyvinylidene fluoride (PVDF), polytetrafluoroethylene (PTFE), vinylidene fluoride-tetrafluoroethylene-propylene ternary copolymer, vinylidene fluoride-hexafluoropropylene-tetrafluoroethylene ternary copolymer, tetrafluoroethylene-hexafluoropropylene copolymer, and fluorinated acrylate resin. In some embodiments, based on the total mass of the positive electrode film layer, the positive electrode binder is present in a mass percentage of 5% or less.

The positive electrode film layer is usually made by applying a positive electrode slurry to the positive electrode current collector followed by drying and cold pressing. The positive electrode slurry is usually formed by dispersing the positive electrode active material, an optional conductive agent, an optional binder, and any other optional additives in a solvent and stirring uniformly. The solvent may be N-methylpyrrolidone (NMP), but is not limited thereto.

## Negative electrode plate

In a third aspect, the present application provides a negative electrode plate, comprising a negative electrode current collector and a negative electrode film layer disposed on at least one surface of the negative current collector, wherein the negative electrode film layer comprises a negative electrode active material and an aldehyde-ketone polymer, in which the aldehyde-ketone polymer comprises the aldehyde-ketone polymer as described in any embodiment of the first aspect of the present application.

As an example, the negative electrode current collector has two surfaces that are opposite to each other in the direction of its own thickness. The negative electrode film layer is disposed on either or both of the two opposite surfaces of the negative electrode current collector.

In some embodiments, the negative electrode active material layer satisfies:

$$v/\lambda > 1.00 \qquad \text{Formula (4),}$$

in Formula (4),

λ represents a porosity of the negative electrode active material layer;
v represents a liquid absorption rate of the negative electrode active material layer, in mg/s.

The detection methods for λ and v are as described for the positive electrode active material layer, and are not

repeated here.

In some embodiments, $3.00<v/\lambda<50.00$; optionally, $3.40\leq v/\lambda\leq 30.00$. Exemplarily, $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, or within a range consisting of any two of the aforementioned values.

In some embodiments, based on the mass of the negative electrode active material layer, the aldehyde-ketone polymer is present in a mass percentage of B%; where $0.2\leq B\leq 5.0$.

When the mass percentage of the aldehyde-ketone polymer is within the aforementioned range, it can significantly improve the interfacial properties of the negative electrode active material layer. Exemplarily, the mass percentage of the aldehyde-ketone polymer may be 0.2%, 0.5%, 0.8%, 1.0%, 1.2%, 1.5%, 2.0%, 2.5%, 3.0%, 3.5%, 4.0%, 4.5%, 5.0%, or within a range consisting of any two of the aforementioned values.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. The composite current collector may be formed by forming a metallic material (copper, copper alloy, nickel, nickel alloy, titanium, titanium alloy, silver, silver alloy and the like) on a polymer material matrix (such as polypropylene (PP), polyethylene terephthalate (PET), polybutylene terephthalate (PBT), polystyrene (PS), polyethylene (PE) and the like).

In some embodiments, the negative electrode active material may be a negative electrode active material known in the art for use in batteries. Exemplarily, the negative electrode active material includes at least one of artificial graphite, natural graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy. The tin-based materials may include at least one of elemental tin, a tin oxide, and a tin alloy. The present application is not limited to these materials, and other conventionally known materials that can be used as negative electrode active materials for batteries may also be used. These negative electrode active materials can be used alone, or in combination of two or more materials.

In some embodiments, the negative electrode film layer may further optionally comprise a negative electrode binder. The negative electrode binder may be at least one selected from styrene-butadiene rubber (SBR), polyacrylic acid (PAA), polyacrylic acid sodium salt (PAAS), polyacrylamide (PAM), polyvinyl alcohol (PVA), sodium alginate (SA), polymethacrylic acid PMAA, and carboxymethyl chitosan (CMCS).

In some embodiments, the negative electrode film layer may further optionally comprise a conductive agent. The negative electrode conductive agent may be at least one selected from superconducting carbon, acetylene black, carbon black, Ketjen black, carbon dots, carbon nanotubes, graphene, and carbon nanofibers.

In some embodiments, the negative electrode film layer may further optionally include other additives, for example thickener, such as sodium carboxymethyl cellulose (CMC).

In some embodiments, the negative electrode plate is prepared by dispersing the above-described component for the preparation of a negative electrode plate, for example a negative electrode active material, the aldehyde-ketone polymer, a conductive agent, a binder, and any other optional additives in a solvent (for example deionized water) to form a negative electrode slurry; and applying the negative electrode slurry to the negative electrode current collector followed by drying, code-pressing and the like, thereby obtaining a negative electrode plate.

Battery cell

In a fourth aspect, the present application provides a battery cell comprising a positive electrode plate, a negative electrode plate, a separator disposed between the positive electrode plate and the negative electrode plate, and an electrolyte. The battery cell may be a lithium-ion battery or the like.

In some embodiments, the positive electrode plate according to any one of the embodiments of the second aspect of the present application may be used as the positive electrode plate, thereby improving the cycle performance of the battery cell. A conventional negative electrode plate may be used as the negative electrode plate.

In some embodiments, the negative electrode plate according to any embodiment of the third aspect of the present application may be used as the negative electrode plate, thereby improving the cycle performance of the battery cell. A conventional positive electrode plate may be used as the positive electrode plate.

In some embodiments, the positive electrode plate according to any one of the embodiments of the second aspect of the present application may be used as the positive electrode plate, and the negative electrode plate according to any embodiment of the third aspect of the present application may be used as the negative electrode plate, thereby improving the cycle performance of the battery cell.

[Electrolyte]

The battery cell further comprises an electrolyte, which serves to conduct ions between the positive electrode

plate and the negative electrode plate. There is no specific limitation on the type of electrolyte in the present application, and it can be selected according to the requirement. For example, the electrolyte may be in a liquid state, a gel state, or an all-solid state.

In some embodiments, an electrolytic solution is used as the electrolyte. The electrolytic solution comprises an electrolyte salt and a solvent.

As an example, the lithium salt may comprise one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate ($LiPO_2F_2$), lithium difluorobisoxalate phosphate (LiDFOP), and lithium tetrafluorooxalate phosphate (LiTFOP).

As an example, the organic solvent may comprise one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may further optionally comprise an additive. For example, the additive may comprise a negative electrode film-forming additive, a positive electrode film-forming additive, as well as an additive that can improve certain performance of batteries, such as an additive that improves overcharge performance of batteries, an additive that improves high-temperature performance of batteries, and an additive that improves low-temperature performance of batteries.

[Separator]

In some embodiments, the battery cell further comprises a separator. The type of the separator is not particularly limited in the present application, and any well-known porous separator having good chemical stability and mechanical stability can be selected.

In some embodiments, the separator may be made of a material that comprises one or more selected from glass fiber, non-woven fabric, polyethylene, polypropylene and polyvinylidene fluoride. The separator can be a single-layer film or a multilayer composite film. When the separator is a multilayer composite film, the materials for each layer may be the same or different.

In some embodiments, the positive electrode plate, the separator, and the negative electrode plate may be manufactured into an electrode assembly by a winding process or a staking process.

The present application does not have particular limitation on the shape of the battery cell, which may be cylindrical, square, or in other arbitrary shapes. FIG. 1 shows a battery cell 5 with a rectangular structure as an example.

In some embodiments, as shown in FIG. 1 and FIG. 2, the outer packaging may include a housing 51 and a cover plate 53. In an example, the housing 51 may include a bottom plate and side plates connected to the bottom plate, and the bottom plate and the side plates are combined to form an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

The preparation method for the battery cell in the present application is well-known. In some embodiments, the positive electrode plate, the separator, the negative electrode plate, and the electrolytic solution may be assembled to form the battery cell. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the battery cell according to the present application may be assembled into a battery module. The battery module may include a plurality of battery cells, and the specific quantity may be adjusted according to the application and capacity of the battery module.

FIG. 3 is a schematic diagram of a battery module 4 as an example. As shown in FIG. 3, in the battery module 4, a plurality of battery cells 5 may be arranged and disposed sequentially along the length direction of the battery module 4. Apparently, they may also be disposed in any other manner. Further, the plurality of battery cells 5 may be fixed by a fastener.

Optionally, the battery module 4 may further include a housing having an accommodating space, and the plurality of battery cells 5 are accommodated in the accommodating space.

In some embodiments, the above-mentioned battery module may also be assembled into a battery pack, and the quantity of battery modules contained in the battery pack may be adjusted according to the application and capacity of the battery pack.

Both the battery module 4 and the battery pack may serve as specific examples of the battery of the present application.

FIG. 4 and FIG. 5 are schematic diagrams of battery pack 1 as an example. As shown in FIG. 4 and FIG. 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for accommodating the battery modules 4. A plurality of battery modules 4 may be disposed in the battery case in any manner.

## Electrical device

In a fifth aspect, the present application provides an electrical device, which comprises at least one of the battery cell, the battery module, and the battery pack of the present application. The battery cell, the battery module, and the battery pack may be used as a power source of the electrical device or as an energy storage unit of the electrical device. The electrical device may be, but is not limited to, a mobile device (such as, a mobile phone and a notebook computer, and the like), an electric vehicle (such as a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, or the like.

The electrical device may comprise the battery cell, the battery module or the battery pack selected according to its usage requirements. FIG. 6 is a schematic diagram of an electrical device as an example. The electrical device 6 is a pure electric vehicle, a hybrid electric vehicle, or a plug-in hybrid electric vehicle. In order to meet requirements of the electrical device for high power and high energy density, the battery pack 1 or the battery module may be used. As another example, the electrical device may be a mobile phone, a tablet computer, a notebook computer, and the like. The electric device is generally required to be light and thin, and a battery cell may be used as a power supply.

## Examples

Hereinafter, embodiments of the present application will be described. The embodiments described below are exemplary and are merely used to explain the present application, and are not to be construed as limiting the present application. If specific techniques or conditions are not specified in the examples, the techniques or conditions described in the literature of the filed or the product specification shall be used. If the manufacturer of the reagent or instrument used is not specified, it is a conventional product that is commercially available.

### Example 1

(1) Preparation of positive electrode plate:

An aluminum foil having a thickness of 12 μm was used as a positive electrode current collector.

An aldehyde-ketone polymer, $LiFePO_4$ as a positive electrode active material, carbon black as a conductive agent, and polyvinylidene fluoride (PVDF) as a binder were added into N-methylpyrrolidone (NMP) to prepare a positive electrode slurry. The mass ratio of aldehyde-ketone polymer, $LiFePO_4$, the conductive carbon black, PVDF and N-methylpyrrolidone (NMP) in the positive electrode slurry were 0.5:96.8:2:0.7:29. The positive electrode slurry was applied on the current collector of aluminum foil and dried at 85°C followed by cold-pressing, trimming, slicing and slitting, and then drying under vacuum at 85°C for 4h, to obtain a positive electrode plate.

(2) Preparation of negative electrode plate:

A copper foil with a thickness of 8 μm was used as a negative electrode current collector.

An aldehyde-ketone polymer, artificial graphite as a negative electrode active material, carbon black as a conductive agent, styrene butadiene rubber (SBR) as a binder, sodium hydroxymethylcellulose (CMC) as a thickener, and deionized water were mixed in a mass ratio of 2.5:94:0.5:2: 1: 100 to prepare a negative electrode slurry. The negative electrode slurry was applied on the current collector of copper foil and dried at 85°C followed by cold-pressing, trimming, slicing and slitting, and drying under vacuum at 120°C for 12h, to obtain a negative electrode plate.

(3) Preparation of electrolytic solution

In an environment with a water content of less than 10 ppm, ethylene carbonate EC and methyl ethyl carbonate (EMC) as non-aqueous organic solvents were mixed in a volume ratio of 3:7 to obtain a solvent for an electrolytic solution. Then, the mixed solvent was mixed with lithium salt $LiPF_6$ to prepare an electrolytic solution with a lithium salt concentration of 1 mol/L.

(4) Preparation of lithium-ion battery:

Polyethylene film (PE) with 16-micron thickness was used as a separator. The positive electrode plate, the separator, and the negative electrode place were stacked in order, so that the separator was located between the positive electrode plate and the negative electrode plate to provide isolation, and they were then wound up to obtain an electrode assembly; the electrode assembly was placed in an outer packaging shell and dried, and then the electrolytic solution was injected. After vacuum sealing, steady standing, formation, shaping and other processes, a lithium-ion battery was obtained.

**Comparative Example 1**

A lithium-ion battery was prepared in a similar manner to that of Example 1, except that the positive electrode plate in Comparative Example 1 did not comprise an aldehyde-ketone polymer and the negative electrode plate in Comparative Example 1 did not comprise an aldehyde-ketone polymer.

**Comparative Example 2**

A lithium-ion battery was prepared in a similar manner to that of Example 1, except that the aldehyde-ketone polymer in the positive electrode plate and the negative electrode plate of Comparative Example 2 was adjusted.

**Examples 2 to 4**

A lithium-ion battery was prepared in a similar manner to that of Example 1, except that the aldehyde-ketone polymers in the positive electrode plate and the negative electrode plate of Examples 2 to 4 were adjusted.

**Example 5**

A lithium-ion battery was prepared in a similar manner to that of Example 1, except that the positive electrode plate of Example 5 comprised an aldehyde-ketone polymer while the negative electrode plate of Example 5 did not comprise an aldehyde-ketone polymer.

**Examples 6 to 9**

A lithium-ion battery was prepared in a similar manner to that of Example 1, except that the amounts the aldehyde-ketone polymer in the positive electrode plate in Examples 6 to 9 were adjusted.

**Examples 10 to 12**

A lithium-ion battery was prepared in a similar manner to that of Example 1, except that the amounts the aldehyde-ketone polymer in the negative electrode plate in Examples 10 to 12 were adjusted.

**The data of Examples and Comparative Examples were shown in Table 1.**

**Test section**

(1) Test of capacity retention rate of lithium-ion battery

Each of the above-mentioned lithium-ion batteries prepared in Examples and Comparative Examples was charged with an equivalent 1.2C stepcharge to 4.25V in a normal temperature environment, then charged at a constant voltage of 4.25 V to a current of 0.05 C, allowed to stand for 5 minutes, and then discharged at 0.33C to 2.8 V, and the obtained capacity was denoted as the initial capacity C0, where the initial clamping force for the lithium-ion battery was set

to 10,000N. The above steps was repeated for the same battery and the discharge capacity Cn of the battery after the $n^{th}$ cycle was recorded. Then the capacity retention rate Pn of the battery after each cycle was calculated by Pn = Cn/C0 * 100%. By using 200 point values of P1, P2, ... P200 as the vertical axis and the corresponding number of cycles as the horizontal axis, a dot plot showing capacity retention rate of the battery (corresponding to the aldehyde-ketone polymer of the examples and comparative examples) as a function of the number of cycles was obtained.

During this test, the first cycle corresponds to n = 1, the second cycle corresponds to n = 2, ... the $200^{th}$ cycle corresponds to n = 200. For example, the datum of capacity retention rate of each battery corresponding to Example 1 in Table 1 was the datum measured after 200 cycles under the above test conditions, that is, the value of P250. The testing procedures of Comparative Example 1 and other Examples were the same as that described above.

(2) Test of direct current impedance of lithium-ion battery

Each of the above-mentioned lithium-ion batteries prepared in Examples and Comparative Examples was charged with an equivalent 1.2C stepcharge to 4.25 V at 25°C, then charged at a constant voltage of 4.25 V to a current of 0.05 C, allowed to stand for 5 minutes, and the voltage V1 was recorded. Then, the battery was discharged at 1/3 C for 30 seconds, and the voltage V2 was recorded, then the internal resistance DCR1 of the battery after the first cycle was obtained by (V2-V1)/1/3 C. The above steps was repeated for the same battery and the internal resistance DCRn (n = 1, 2, 3, ... 1200) of the battery after the $n^{th}$ cycle was recorded. By using 200 point values of the above DCR1, DCR2, DCR3, ... DCR200 as the vertical axis and the corresponding number of cycles as the horizontal axis, a dot plot showing the discharge DCIR of the battery (corresponding to the aldehyde-ketone polymer of the examples and comparative examples) as a function of the number of cycles was obtained.

During this test, the first cycle corresponds to n = 1, the second cycle corresponds to n = 2, ... the $200^{th}$ cycle corresponds to n = 200. For example, the internal resistance increase ratio of the battery of Example 1 being equal to (DCRn-DCR1)/DCR1 * 100% was shown in Table 1. The testing procedures of Comparative Example 1 and other Examples were the same as that described above. The data in Table 1 were the data measured after 200 cycles under the above test conditions.

**Test result**

Table 1

| Items | Aldehyde-ketone polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transitio n temperat ure $T_g$ (°C) | Molec ular weight (g/mol ) | Precipit ation value m/n | K | Conte nt by mass A% | λ | v(mg/s ) | v/λ | Conte nt by mass B% | λ | v(mg/s ) | v/λ | Capacit y retentio n rate % | DCI-R% |
| Compara tive Ex-ample 1 | / | / | / | / | / | / | / | 24.8% | 0.18 | 0.-73 | / | 29.0% | 0.50 | 1.72 | 80 | 25 |
| Compara tive Example 2 | 100%Formalde hyde | / | -30 | 20000 0 | 0.4 | 1-.4 | 0.5 | 24.8% | 0.2 | 0.-81 | 2.5 | 29.0% | 0.52 | 1.79 | 81 | 24 |
| Example 1 | 30%PVA polyvinyl alcohol | 70%Formal dehyde | 28 | 20000 0 | 12 | 0-.8 | 0.5 | 24.8% | 0.52 | 2.-10 | 2.5 | 29.0% | 5.60 | 19.3 1 | 87 | 13 |
| Example 2 | 20%PVA polyvinyl alcohol | 80%Butyra ldehyde | 55 | 20000 0 | 7 | 0-.9 | 0.5 | 24.8% | 0.45 | 2.-02 | 2.5 | 29.0% | 4.00 | 13.8 0 | 85 | 15 |
| Example 3 | 100% Dioxolane | / | -38 | 18000 0 | 10 | 0-.8 | 0.5 | 27.9% | 0.38 | 1.-36 | 2.5 | 33.3% | 2.70 | 8.11 | 84 | 16 |
| Example 4 | 100%Trioxane | / | -53 | 18000 0 | 8 | 0-.9 | 0.5 | 27.9% | 0.50 | 1.-79 | 2.5 | 33.3% | 5.00 | 16.8 0 | 90 | 10 |
| Example 5 | 30%PVA polyvinyl alcohol | 70%Formal dehyde | 28 | 20000 0 | 12 | 0-.8 | 0.5 | 24.8% | 0.52 | 2.-10 | 0 | 29.0% | 0.50 | 1.72 | 85 | 18 |
| Example 6 | 30%PVA polyvinyl alcohol | 70%Formal dehyde | 28 | 20000 0 | 12 | 0-.8 | 0 | 24.8% | 0.18 | 0.-73 | 2.5 | 29.0% | 5.60 | 19.3 1 | 87 | 15 |
| Example 7 | 100%Trioxane | / | -53 | 18000 0 | 8 | 0-.9 | 0.1 | 24.8% | 0.20 | 0.-81 | 2.5 | 29.0% | 5.00 | 16.8 0 | 88 | 13 |
| Example 8 | 100%Trioxane | / | -53 | 18000 0 | 8 | 0-.9 | 1.5 | 24.8% | 0.8 | 3.-23 | 2.5 | 29.0% | 5.00 | 16.8 0 | 91 | 9 |
| Example 9 | 100%Trioxane | / | -53 | 18000 0 | 8 | 0-.9 | 2.0 | 24.8% | 1.2 | 4.-84 | 2.5 | 29.0% | 5.00 | 16.8 0 | 87 | 14 |

(continued)

| Items | Aldehyde-ketone polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transitio n temperat ure $T_g$ (°C) | Molec ular weight (g/mol ) | Precipit ation value m/n | K | Conte nt by mass A% | λ | v(mg/s ) | v/λ | Conte nt by mass B% | λ | v(mg/s ) | v/λ | Capacit y retentio n rate % | DCI-R% |
| Example 10 | 100%Trioxane | / | -53 | 18000 0 | 8 | 0-.9 | 0.5 | 24.8% | 0.50 | 1.-79 | 0.2 | 29.0% | 3.00 | 10.3 0 | 88 | 15 |
| Example 11 | 100%Trioxane | / | -53 | 18000 0 | 8 | 0-.9 | 0.5 | 24.8% | 0.50 | 1.-79 | 5.0 | 29.0% | 7.00 | 24.1 4 | 92 | 8 |
| Example 12 | 100%Trioxane | / | -53 | 18000 0 | 8 | 0-.9 | 0.5 26 | 24.8% | 0.50 | 1.-79 | 6.0 | 29.0% | 10.00 | 34.5 0 | 87 | 16 |

In Table 1, "100% formaldehyde" means that the mass percent formaldehyde is 100% based on the total mass of monomer 1 and monomer 2.

"30% polyvinyl alcohol" means that the mass percent of polyvinyl alcohol is 30% based on the total mass of monomer 1 and monomer 2.

As can be seen from Table 1, compared with Comparative Example 1, the aldehyde-ketone polymers of the present application were added in the positive electrode plates and/or negative electrode plates in Examples of the present application, thus improving cycle performance of the lithium-ion batteries. Compared to Comparative Example 2, the Examples of the present application, satisfying $5 \leq m/n \leq 1000$, especially $10 \leq m/n \leq 50$, tend to have a loose arrangement for their molecular chains, with a weaker intermolecular force and thus the adjacent molecular chains are easily separated. A chain segment movement is achieved through internal rotation between molecules, forming a molecular chain structure with higher flexibility, which can significantly improve the cycle performance of lithium-ion batteries.

While the present application has been described with reference to preferred embodiments, various modifications may be made thereto and components therein may be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

**1.** An aldehyde-ketone polymer for a battery cell, wherein
the aldehyde-ketone polymer satisfies: $5 \leq m/n \leq 1000$, in which n represents a mass of the aldehyde-ketone polymer, in grams, and m represents a mass, in grams, of a first substance that is obtained by:

adding the aldehyde-ketone polymer to a first solvent at 45°C to form a polymer system;
allowing the polymer system to stand for 8 hours at 45°C and for ≥24 hours at 25°C, and then filtering the polymer system through a 200-mesh screen to obtain remains as the first substance.

**2.** The aldehyde-ketone polymer according to claim 1, wherein,
$10 \leq m/n \leq 1000$; further optionally, $10 \leq m/n \leq 50$.

**3.** The aldehyde-ketone polymer according to claim 1 or 2, wherein

the first solvent comprises a cyclic carbonate solvent and/or a linear carbonate solvent;
optionally, the cyclic carbonate solvent comprises one or more of ethylene carbonate EC, vinylene carbonate VC, fluoroethylene carbonate FEC, difluoroethylene carbonate DFEC, vinyl ethylene carbonate VEC, and dicaprylyl carbonate CC;
optionally, the linear carbonate solvent comprises one or more of dimethyl carbonate DMC, diethyl carbonate DEC, methyl ethyl carbonate EMC, diphenyl carbonate DPC, methyl allyl carbonate MAC, and polycarbonate VA.

**4.** The aldehyde-ketone polymer according to any one of claims 1 to 3, wherein the aldehyde-ketone polymer has a slope K of an elastic modulus G'-loss modulus G" curve that is measured by subjecting a sheet-like structure formed of the aldehyde-ketone polymer to dynamic frequency scanning tests at $(T_m+20)$°C, and $0.8<K<\infty$, where $T_m$°C represents the melting temperature of the aldehyde-ketone polymer.

**5.** The aldehyde-ketone polymer according to any one of claims 1 to 4, wherein
the aldehyde-ketone polymer has a glass transition temperature of $T_g$ in °C, and $-100 \leq T_g \leq 60$; optionally, $-80 \leq T_g \leq 30$.

**6.** The aldehyde-ketone polymer according to any one of claims 1 to 5, wherein the aldehyde-ketone polymer comprises the structural unit shown in Formula (I):

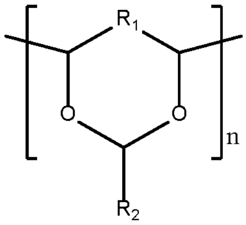

Formula (I),

in which, $R_1$ comprises a single bond, a substituted or unsubstituted C1-C6 methylene group; $R_2$ comprises a hydrogen atom, a substituted or unsubstituted C1-C6 alkyl group;
optionally, $R_1$ comprises a single bond, a substituted or unsubstituted C1-C3 methylene group; $R_2$ comprises a hydrogen atom, a substituted or unsubstituted C1-C3 alkyl group.

**7.** The aldehyde-ketone polymer according to claim 6, wherein the aldehyde-ketone polymer comprises at least one of the structural units shown in Formula (I-1) to Formula (I-6),

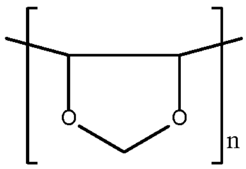

Formula (I-1),

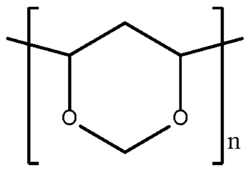

Formula (I-2),

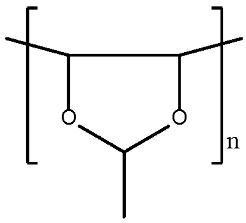

Formula (I-3),

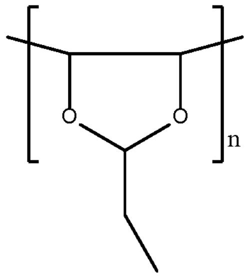

Formula (I-4),

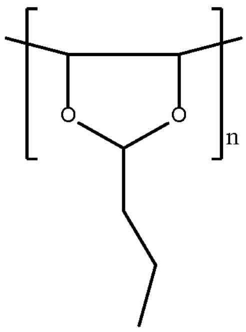

Formula (I-5),

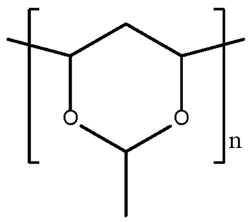

Formula (I-6).

**8.** The aldehyde-ketone polymer according to any one of claims 1 to 7, wherein the aldehyde-ketone polymer comprises the structural units shown in Formula (II),

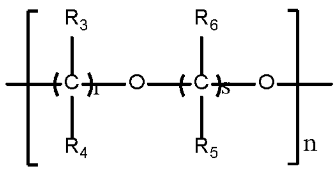

Formula (II),

in which, $R_3$ to $R_6$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s each independently are integers selected from 0 to 5, and at least one of r and s is a positive integer;
optionally, $R_3$ to $R_6$ each independently comprise a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

**9.** The aldehyde-ketone polymer according to claim 8, wherein the aldehyde-ketone polymer comprises at least one of the structural units shown in Formula (II-1) to Formula (II-4),

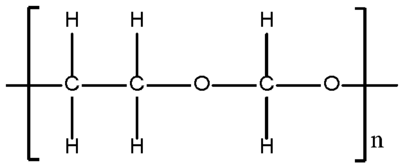
(II-1),
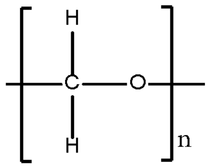
(II-2),

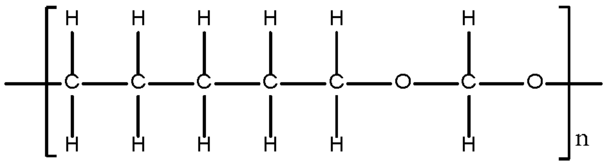
(II-3),

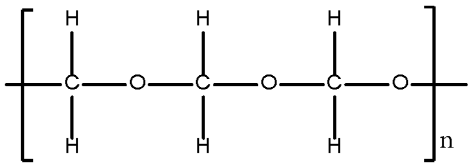
(II-4).

**10.** The aldehyde-ketone polymer according to any one of claims 6 to 9, wherein

n is a positive integer selected from 500 to 15000; and/or
the aldehyde-ketone polymer has a molecular weight of from $1.2\times10^5$g/mol to $1.0\times10^6$g/mol.

**11.** A positive electrode plate, comprising a positive electrode current collector and a positive electrode film layer disposed on the positive electrode current collector, wherein the positive electrode film layer comprises a positive electrode active material and an aldehyde-ketone polymer, and the aldehyde-ketone polymer comprises the aldehyde-ketone polymer according to any one of claims 1 to 10.

**12.** A negative electrode plate, comprising a negative electrode current collector and a negative electrode film layer disposed on the negative electrode current collector, wherein the negative electrode film layer comprises a negative electrode active material and an aldehyde-ketone polymer, and the aldehyde-ketone polymer comprises the aldehyde-ketone polymer according to any one of claims 1 to 10.

**13.** A battery cell comprising a positive electrode plate and a negative electrode plate, wherein

the positive electrode plate comprises the positive electrode plate according to claim 11; and/or
the negative electrode plate comprises the negative electrode plate according to claim 12.

**14.** A battery, comprising the battery cell according to claim 13.

**15.** An electrical device comprising the battery according to claim 14.

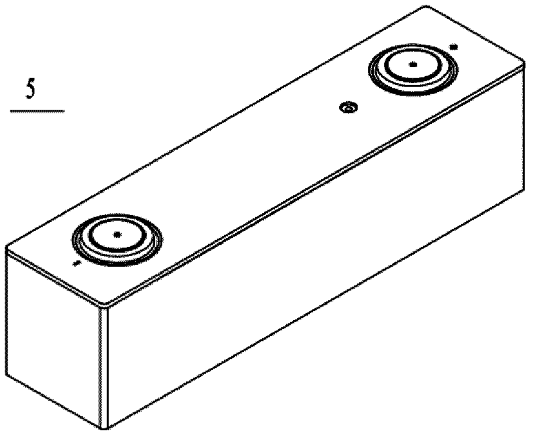


FIG. 1

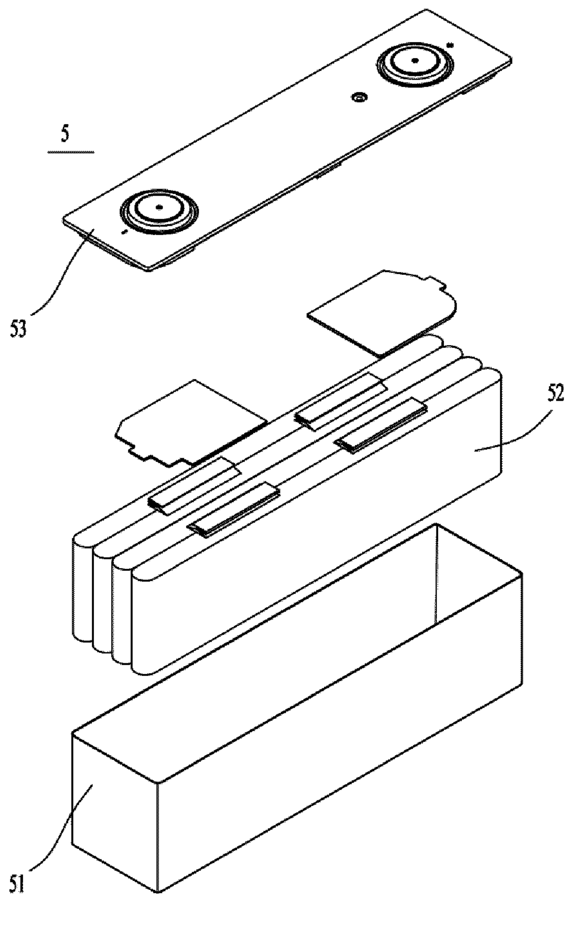


FIG. 2

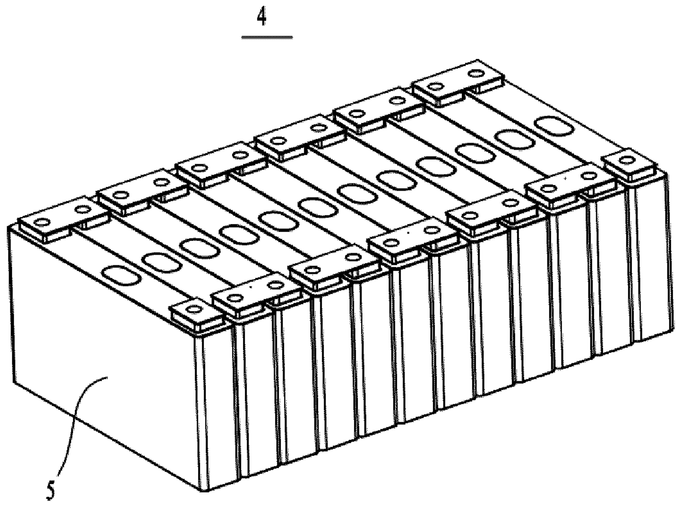


FIG. 3

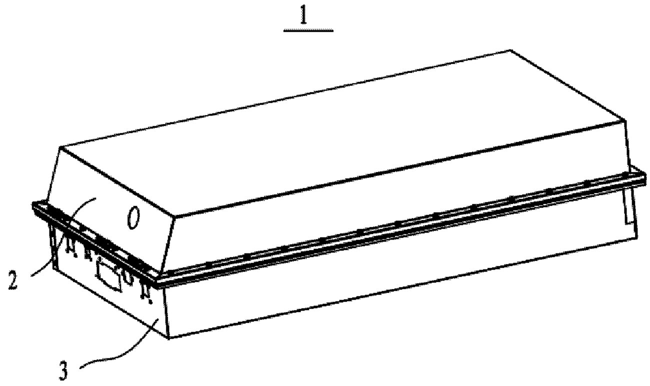


FIG. 4

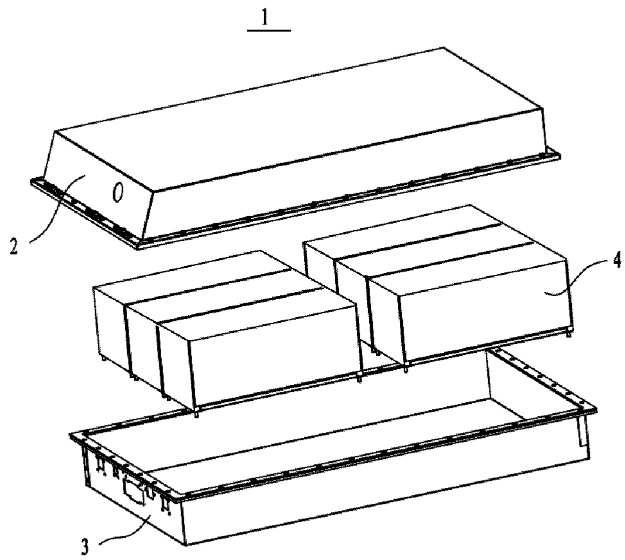


FIG. 5

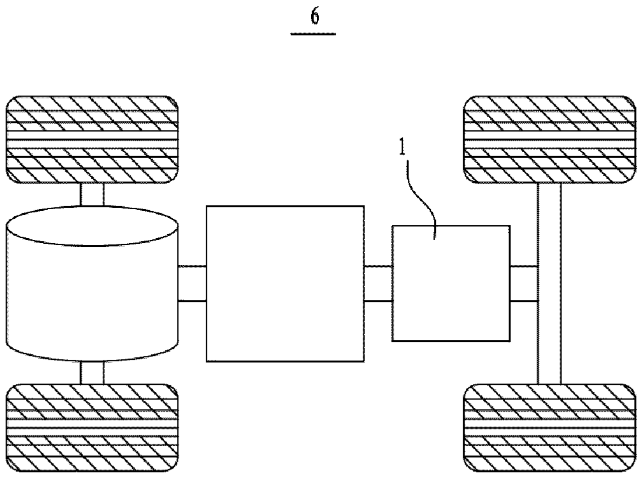


FIG. 6

**INTERNATIONAL SEARCH REPORT**

International application No.
**PCT/CN2023/076789**

**A. CLASSIFICATION OF SUBJECT MATTER**

C08G6/02(2006.01)i;C08G18/56(2006.01)i;C08G65/16(2006.01)i;C08G2/08(2006.01)i;H01M10/0525(2010.01)i;H01M10/058(2010.01)i;H01M4/62(2006.01)i

According to International Patent Classification (IPC) or to both national classification and IPC

**B. FIELDS SEARCHED**

Minimum documentation searched (classification system followed by classification symbols)

IPC: C08G,H01M

Documentation searched other than minimum documentation to the extent that such documents are included in the fields searched

Electronic data base consulted during the international search (name of data base and, where practicable, search terms used)

CNKI, CNTXT, ENTXT(C), DWPI, ISI Web of Knowledge: 聚乙烯醇, PVA, 甲醛, 丁醛, 醛, 聚乙烯醇缩醛, 聚乙烯醇缩甲醛, 聚乙烯醇缩丁醛, 二氧五环, 二氧戊烷, 三氧六环, 三聚甲醛, 吸附, 附着, 存储, 储存, 电解液, polyvinyl alcohol, PVA, formaldehyde, butyraldehyde, aldehyde, polyvinyl acetal, polyvinyl formal, polyvinyl butyral, dioxolane, trioxane, paraformaldehyde, adsorp+, absorb+, stor+, electrolyte?

**C. DOCUMENTS CONSIDERED TO BE RELEVANT**

| Category* | Citation of document, with indication, where appropriate, of the relevant passages | Relevant to claim No. |
|---|---|---|
| X | CN 103804892 A (UNIVERSITY OF SCIENCE AND TECHNOLOGY BEIJING; JOHNSON CONTROLS TECHNOLOGY COMPANY) 21 May 2014 (2014-05-21)<br>claims 1-10, and description, paragraphs [0040]-[0043] and [0064] | 1-7 |
| X | CN 108028387 A (SEKISUI CHEMICAL CO., LTD.) 11 May 2018 (2018-05-11)<br>claims 1-7, and embodiments | 1-4, 6, 7, 10-15 |
| X | CN 109103517 A (INSTITUTE OF CHEMISTRY, CHINESE ACADEMY OF SCIENCES) 28 December 2018 (2018-12-28)<br>claims 1-8, and embodiments 10 and 13 | 1-5, 8-9, 12-15 |
| A | CN 104319420 A (UNIVERSITY OF SCIENCE AND TECHNOLOGY BEIJING) 28 January 2015 (2015-01-28)<br>entire document | 1-15 |
| A | CN 105098191 A (TOYOTA MOTOR CORPORATION) 25 November 2015 (2015-11-25)<br>entire document | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 March 2023** | **22 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.
**PCT/CN2023/076789**

**C. DOCUMENTS CONSIDERED TO BE RELEVANT**

| Category* | Citation of document, with indication, where appropriate, of the relevant passages | Relevant to claim No. |
|---|---|---|
| A | CN 108780895 A (SEKISUI CHEMICAL CO., LTD.) 09 November 2018 (2018-11-09) entire document | 1-15 |
| A | CN 112164778 A (CHANGSHA RESEARCH INSTITUTE OF MINING AND METALLURGY CO., LTD.) 01 January 2021 (2021-01-01) entire document | 1-15 |

Form PCT/ISA/210 (second sheet) (July 2022)

**INTERNATIONAL SEARCH REPORT**
**Information on patent family members**

International application No.
**PCT/CN2023/076789**

| Patent document cited in search report | Publication date (day/month/year) | Patent family member(s) | Publication date (day/month/year) |
|---|---|---|---|
| CN 103804892 A | 21 May 2014 | WO 2014072789 A2 | 15 May 2014 |
| | | WO 2014072789 A3 | 20 November 2014 |
| | | CN 103804892 B | 18 January 2019 |
| CN 108028387 A | 11 May 2018 | US 2019074517 A1 | 07 March 2019 |
| | | US 10777819 B2 | 15 September 2020 |
| | | KR 20180129756 A | 05 December 2018 |
| | | KR 102279837 B1 | 20 July 2021 |
| | | WO 2017170898 A1 | 05 October 2017 |
| | | JP 6259952 B1 | 10 January 2018 |
| | | JPWO 2017170898 A1 | 05 April 2018 |
| | | EP 3439088 A1 | 06 February 2019 |
| | | EP 3439088 A4 | 04 December 2019 |
| | | TW 201739096 A | 01 November 2017 |
| | | TWI 709261 B | 01 November 2020 |
| | | CN 108028387 B | 28 June 2022 |
| CN 109103517 A | 28 December 2018 | WO 2018233413 A1 | 27 December 2018 |
| | | CN 109103517 B | 24 April 2020 |
| CN 104319420 A | 28 January 2015 | CN 104319420 B | 25 January 2017 |
| CN 105098191 A | 25 November 2015 | KR 20150130924 A | 24 November 2015 |
| | | KR 101676956 B1 | 16 November 2016 |
| | | US 2015333333 A1 | 19 November 2015 |
| | | US 9466840 B2 | 11 October 2016 |
| | | JP 2015219964 A | 07 December 2015 |
| | | JP 5979177 B2 | 24 August 2016 |
| | | CN 105098191 B | 24 April 2018 |
| CN 108780895 A | 09 November 2018 | WO 2018079200 A1 | 03 May 2018 |
| | | JP 6345357 B1 | 20 June 2018 |
| | | JPWO 2018079200 A1 | 25 October 2018 |
| | | KR 20190075863 A | 01 July 2019 |
| | | TW 201822395 A | 16 June 2018 |
| CN 112164778 A | 01 January 2021 | None | |

Form PCT/ISA/210 (patent family annex) (July 2022)